# EUROPÄISCHE PATENTSCHRIFT

(11) **EP 3 617 481 B1**
(45) Veröffentlichungstag und Bekanntmachung des Hinweises auf die Patenterteilung: **05.10.2022**
(21) Anmeldenummer: 19174687.4
(22) Anmeldetag: 15.05.2019
(51) Int. Cl.: F02C 9/26

(54) **ÜBERWACHUNG VON SERVOVENTIL-FILTERELEMENTEN**
MONITORING OF SERVO VALVE FILTER ELEMENTS
SURVEILLANCE DES ÉLÉMENTS FILTRANTS DE SERVO-SOUPAPE

(30) Priorität: 03.09.2018 DE 102018214923
(43) Veröffentlichungstag der Anmeldung: 04.03.2020
(73) Patentinhaber: Rolls-Royce Deutschland Ltd & Co KG, 15827 Blankenfelde-Mahlow (DE)
(72) Erfinder: MIKAT, Dr. Heiko, 15827 Blankenfelde-Mahlow, DE (DE)
(74) Vertreter: Maikowski & Ninnemann Patentanwälte Partnerschaft mbB

(56) Entgegenhaltungen:
- EP-A2- 1 801 391
- EP-A2- 2 458 179
- US-A1- 2017 227 424

## Beschreibung

Die vorliegende Offenbarung bezieht sich auf ein Verfahren gemäß Anspruch 1 und ein System gemäß Anspruch 8 zur Bestimmung eines Zustands zumindest eines Filterelements zumindest einer Servoventilanordnung eines Gasturbinentriebwerks.

Filterelemente in Fluidsystemen, insbesondere in Kraftstoffsystemen, können im Laufe der Zeit durch Partikel im Fluid, z.B. dem Kraftstoff, sukzessive verblocken. Dies gilt insbesondere für feinmaschige Filterelemente von Servoventilen, die mittels eines unter Druck stehenden Kraftstoffs angesteuert werden. Derartige Filterelemente oder die ganzen Servoventile können in regelmäßigen Wartungsintervallen ausgetauscht werden. Verblockt ein solches Filterelement allerdings bereits vorher in einem vorbestimmten Maß, der einen umgehenden Austausch erfordert, kann dessen Austausch zu ungeplanten Wartungsarbeiten führen. Insbesondere bei Gasturbinentriebwerken können ungeplante Wartungsarbeiten zu ungewünschten Standzeiten führen, z.B. eines Luftfahrzeugs mit einem solchen Gasturbinentriebwerk.

Bei modernen Gasturbinentriebwerken existiert ein Trend zu immer größeren Leistungen. Mit der Leistung steigen regelmäßig auch die Abwärme von Ölsystemen solcher Gasturbinentriebwerke und infolgedessen die Kraftstofftemperaturen. Mit steigenden Kraftstofftemperaturen erhöht sich das Risiko einer Partikelbildung im Kraftstoff, was wiederum ein Verblocken der Filterelemente fördern kann.

Die EP 1 801 391 A2 und die US 2017/0227424 A1 beschreiben jeweils ein Kraftstoffsystem eines Triebwerks mit Ventilen und Zustandsüberwachung. In der EP 2 458 179 A2 ist ein Verfahren zur Überwachung einer elektronischen Triebwerkssteuerung zur Erkennung einer Filterverblockung beschrieben.

Aufgabe der vorliegenden Erfindung ist es, ungeplante Wartungsmaßnahmen an Filterelementen zu reduzieren oder gar zu vermeiden.

Gemäß einem Aspekt wird ein Verfahren zur Bestimmung eines Zustands zumindest eines Filterelements zumindest einer Servoventilanordnung eines Gasturbinentriebwerks bereitgestellt. Das Verfahren umfasst folgende Schritte: Erfassen, mittels einer Messeinrichtung, einer Vielzahl von Werten (insbesondere Messwerten) eines Steuerstroms eines elektrischen Aktors der Servoventilanordnung zu verschiedenen Zeitpunkten und/oder Zeitspannen; Analysieren, mittels einer Analyseeinrichtung, der Vielzahl von Werten, wobei eine zeitliche Änderung des Steuerstroms ermittelt wird, und Bestimmen des Zustands des Filterelements anhand der zeitlichen Änderung des Steuerstroms.

Somit werden zeitliche Trends in den Steuerströmen ermittelt. Es ist auf diese Weise möglich, einen optimierten Zeitpunkt für einen Austausch des Filterelements oder einer Servoventilanordnung mit dem Filterelement festzulegen, der ungeplante Wartungsmaßnahmen vermeidet. Das Verfahren ermöglicht somit eine Überwachung (des Zustands) von Servoventil-Filterelementen. Zudem ist es möglich, anhand des Verfahrens (indirekt) Kraftstoffeigenschaften zu ermitteln, konkret insbesondere zu ermitteln, ob eine temperaturbedingte Partikelbildung im Kraftstoff vorliegt. Dies ist anhand der analysierten Trends besonders frühzeitig möglich. In Reaktion auf das Analysieren können geeignete Instandhaltungsmaßnahmen für die Aufrechterhaltung der Verfügbarkeit des Gasturbinentriebwerks optimiert initialisiert werden.

Zu den verschiedenen Zeitpunkten und/oder Zeitspannen wird jeweils ein Verlauf des Steuerstroms gegenüber einem Maß für eine Ventildynamik (insbesondere einer Verstellgeschwindigkeit, eines Verfahrweges und/oder einer Verstellposition) eines Servoventils der Servoventilanordnung ermittelt. Dies ermöglicht eine besonders genaue Ermittlung der Trends.

Beim Analysieren der zeitlichen Änderung des Steuerstroms wird dann die zeitliche Änderung des Verlaufs des Steuerstroms ermittelt.

Die verschiedenen Zeitpunkte oder Zeitspannen können verschiedenen Flügen eines Luftfahrzeugs mit dem Gasturbinentriebwerk zugeordnet sein. Das Analysieren erfolgt z.B. zwischen zwei Flügen.

Die verschiedenen Zeitpunkte oder Zeitspannen können jeweils einem Beschleunigungsmanöver, einem kontinuierlichen Betriebszustand oder einem Zustand der Betriebsbereitschaft des Gasturbinentriebwerks entsprechen. Es können also Trends bei den Steuerströmen zwischen besonders gut vergleichbaren Situationen ermittelt werden.

Das Analysieren umfasst optional eine Vorhersage eines zukünftigen Zustands des Filterelements. Eine solche Vorhersage kann zur Ermittlung eines (optimierten) Zeitpunkts zum Austausch des Filterelements oder des Servoventils verwendet werden.

Die zumindest eine Servoventilanordnung umfasst in einer Ausgestaltung ein zur Steuerung einer Kraftstoffzufuhr des Gasturbinentriebwerks eingerichtetes Servoventil und/oder ein zur Steuerung einer Stellung von Schaufeln des Gasturbinentriebwerks eingerichtetes Servoventil.

Die Analyse kann offline erfolgen, also nicht in Echtzeit, insbesondere unabhängig von einem Betriebszustand des Gasturbinentriebwerks oder bei abgeschaltetem Gasturbinentriebwerk, z.B. wenn sich das Luftfahrzeug am Boden befindet.

Gemäß einem Aspekt wird ein System zur Bestimmung eines Zustands zumindest eines Filterelements zumindest einer Servoventilanordnung eines Gasturbinentriebwerks bereitgestellt. Das System umfasst eine Messeinrichtung, die eingerichtet ist zum Erfassen einer Vielzahl von Werten (insbesondere Messwerten) eines Steuerstroms eines elektrischen Aktors der Servoventilanordnung zu verschiedenen Zeitpunkten und/oder Zeitspannen; und eine Analyseeinrichtung, die eingerichtet ist zum Analysieren der Vielzahl von Werten, wobei mit der Analyseeinrichtung eine zeitliche Änderung des Steuerstroms ermittelbar ist, um einen Zustand des Filterelements zu bestimmen, insbesondere in Bezug auf eine Verblockung. Das System ist dazu eingerichtet, zu den verschiedenen Zeitpunkten und/oder Zeitspannen jeweils ein Verlauf des Steuerstroms gegenüber einem Maß für eine Ventildynamik eines Servoventils der Servoventilanordnung zu ermitteln, wobei beim Analysieren der zeitlichen Änderung des Steuerstroms die zeitliche Änderung des Verlaufs des Steuerstroms ermittelt wird.

Das System kann zur Durchführung des Verfahrens nach einer beliebigen, hierin beschriebenen Ausgestaltung eingerichtet sein. Umgekehrt kann das hierin beschriebene Verfahren ein System nach einer beliebigen, hierin beschriebenen Ausgestaltung verwenden.

Optional umfasst das System die Servoventilanordnung und/oder das Gasturbinentriebwerk.

Die Messeinrichtung kann am Gasturbinentriebwerk oder am Luftfahrzeug angeordnet sein, insbesondere fest damit verbunden sein.

Die Analyseeinrichtung kann vom Gasturbinentriebwerk und/oder vom Luftfahrzeug beabstandet angeordnet sein, insbesondere kann das Gasturbinentriebwerk relativ zur Analyseeinrichtung bewegbar sein.

Es werden nun beispielhaft Ausführungsformen mit Bezug auf die Figuren beschrieben; in den Figuren zeigen:
- Figur 1: ein System mit einem Luftfahrzeug mit mehreren Gasturbinentriebwerken und einer Analyseeinrichtung;
- Figur 2: eine Seitenschnittansicht eines Gasturbinentriebwerks des Luftfahrzeugs;
- Figur 3: eine schematische Darstellung einer Servoventilanordnung zur Kraftstoffdosierung;
- Figur 4: eine schematische Darstellung einer Servoventilanordnung zur Einstellung von Leitschaufeln des Gasturbinentriebwerks;
- Figur 5A: eine schematische Darstellung der Auswirkungen einer zunehmenden asymmetrischen Verblockung eines Filterelements;
- Figur 5B: eine schematische Darstellung der Auswirkungen einer zunehmenden symmetrischen Verblockung eines Filterelements;
- Figur 6: eine schematische Darstellung der Abhängigkeit von Steuerströmen in Bezug auf verschiedene Filterelemente; und
- Figur 7: ein schematische Darstellung eines Verfahrens zur Bestimmung eines Zustands zumindest eines Filterelements zumindest einer Servoventilanordnung eines Gasturbinentriebwerks.

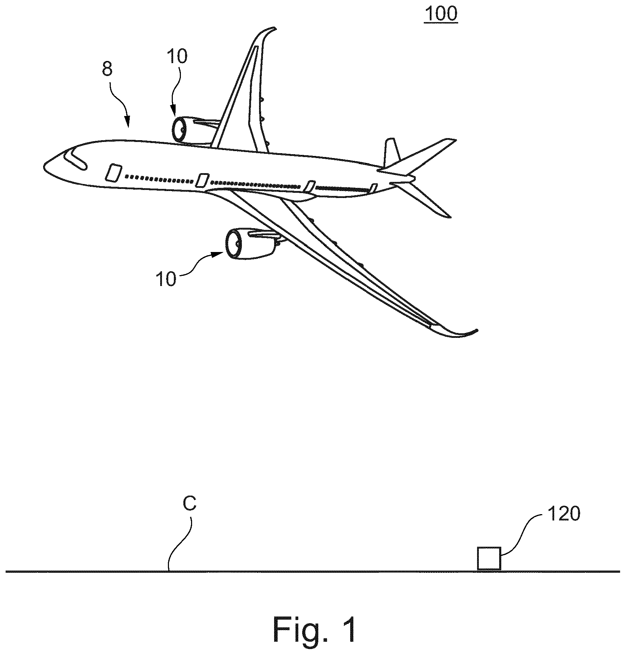

Figur 1 zeigt ein System 100 zur Bestimmung eines Zustands zumindest eines Filterelements zumindest einer Servoventilanordnung eines Gasturbinentriebwerks 10 eines Luftfahrzeugs 8, hier in Form eines Passagierflugzeugs. Das Luftfahrzeug 8 umfasst zumindest eines, hier mehrere Gasturbinentriebwerke 10. Ferner umfasst das System 100 eine am Gasturbinentriebwerk 10 angeordnete und weiter unten näher erläuterte Messeinrichtung sowie eine Analyseeinrichtung 120. Die Analyseeinrichtung 120 ist am Boden angeordnet. Beispielsweise ist die Analyseeinrichtung 120 Teil einer zentralen Recheneinheit zur Auswertung von Flugdaten. Optional umfasst das System 100 eine Vielzahl an Gasturbinentriebwerken 10 und/oder Luftfahrzeugen 8.

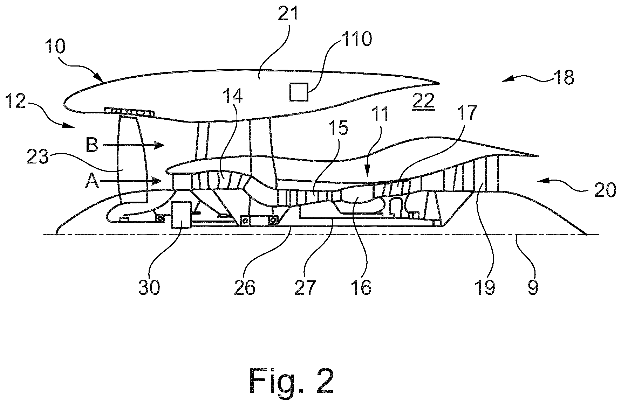

Figur 2 stellt das Gasturbinentriebwerk 10 mit einer Hauptdrehachse 9 dar. Das Gasturbinentriebwerk 10 umfasst einen Lufteinlass 12 und ein Fan 23, der zwei Luftströme erzeugt: einen Kernluftstrom A und einen Bypassluftstrom B. Das Gasturbinentriebwerk 10 umfasst einen Kern 11, der den Kernluftstrom A aufnimmt. Das Kerntriebwerk 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Der Fan 23 ist über eine Welle 26 und ein (optionales, z.B. epizyklisches) Planetengetriebe 30 an der Niederdruckturbine 19 angebracht und wird durch diese angetrieben.

Im Betrieb wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Der Fan 23 stellt allgemein den Hauptteil der Schubkraft bereit. Das (optionale) Planetengetriebe 30 ist ein Untersetzungsgetriebe.

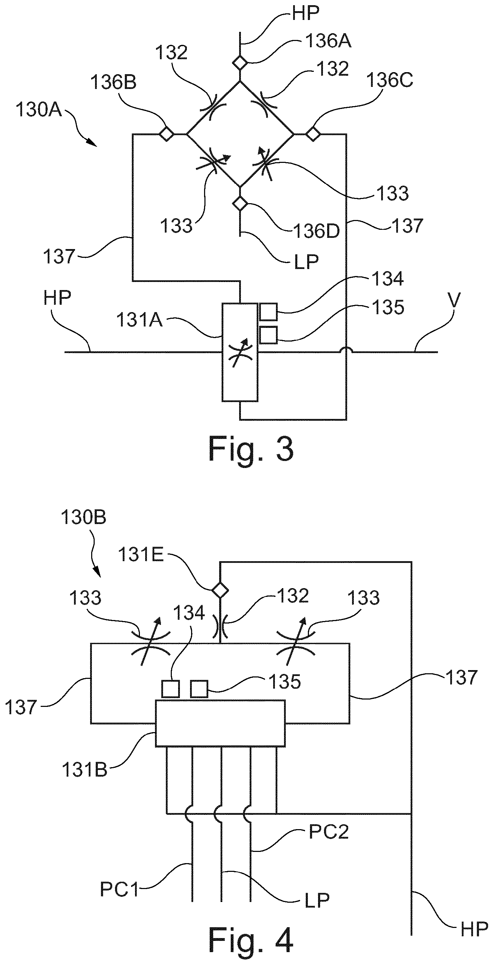

Die Menge an pro Zeiteinheit an die Verbrennungsvorrichtung zugeführten Kraftstoffs wird durch eine Servoventilanordnung 130A eingestellt, welche in Figur 2 nicht gezeigt, sondern anhand von Figur 3 veranschaulicht ist.

Das Gasturbinentriebwerk 10 umfasst einen oder mehrere Leitschaufelkränze mit jeweils einer Vielzahl von Leitschaufeln. Die Leitschaufelkränze sind nicht um die Hauptdrehachse rotierbar. Die einzelnen Leitschaufeln sind an einer z.B. mit der Triebwerksgondel 21 fest verbundenen Struktur schwenkbar montiert. Zum Schwenken der Leitschaufeln umfasst das Gasturbinentriebwerk 10 eine Servoventilanordnung 130B, welche in Figur 2 nicht gezeigt, sondern anhand von Figur 4 veranschaulicht ist.

Das Gasturbinentriebwerk 10 umfasst ferner eine Messeinrichtung 110. Die Messeinrichtung 110 ist ausgebildet und vorgesehen zum Erfassen einer Vielzahl von Werten eines Steuerstroms eines elektrischen Aktors zumindest einer Servoventilanordnung, insbesondere der Servoventilanordnung 130A, 130B gemäß Figur 3 und/oder 4, zu verschiedenen Zeitpunkten und/oder Zeitspannen.

Die Analyseeinrichtung 120 (siehe Figur 1) ist ausgebildet und vorgesehen zum Analysieren der Vielzahl von Werten der Messeinrichtung 110, um eine zeitliche Änderung des Steuerstroms zu ermitteln und anhand dessen einen Zustand eines Filterelements der Servoventilanordnung zu bestimmen.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 2 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbofantriebwerk bezieht, kann die Offenbarung beispielsweise bei einer beliebigen Art von Gasturbinentriebwerk, wie z. B. bei einem Open-Rotor- (bei dem die Fanstufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 2) und eine Umfangsrichtung (senkrecht zu der Ansicht in Figur 2) umfasst. Die axiale, die radiale und die Umfangsrichtung verlaufen senkrecht zueinander.

Figur 3 zeigt eine Servoventilanordnung 130A des Gasturbinentriebwerks 10. Die Servoventilanordnung 130A dient zur Steuerung einer Kraftstoffzufuhr des Gasturbinentriebwerks 10 (als Fuel Metering Valve, FMV). Die Servoventilanordnung 130A umfasst ein Servoventil 131A. Bei dem Servoventil 131A handelt es sich z.B. um ein Prallplattenservoventil. Das Servoventil 131A ist an eine Hochdruck-Kraftstoffleitung HP und eine Versorgungsleitung V des Gasturbinentriebwerks 10 angeschlossen.

Das Servoventil 131A ist durch Ansteuern eines elektrischen Aktors 134 in Form eines Torquemotors einstellbar, um die pro Zeiteinheit von der Hochdruck-Kraftstoffleitung HP in die Versorgungsleitung V eingeleitete Kraftstoffmenge zu regeln. Die Versorgungsleitung V ist an die Verbrennungseinrichtung 16 angeschlossen, um diese mit Kraftstoff zu versorgen.

Das Servoventil 131A umfasst zwei Steuereingänge, die über Steuerleitungen 137 mit unter Druck stehendem Kraftstoff beaufschlagt sind. Hierzu ist jede Steuerleitung 137 (optional über jeweils ein Drosselventil 132 zum Erzeugen eines definierten Druckzustandes) an eine gemeinsame Hochdruck-Kraftstoffleitung HP angeschlossen, z.B. entsprechend Figur 3 an einer gemeinsamen Verzweigung. Ferner ist jede Steuerleitung 137 (optional über jeweils ein z.B. zur Kalibrierung einstellbares Ventil 133) an eine gemeinsame Niederdruck-Kraftstoffleitung LP angeschlossen, z.B. entsprechend Figur 3 an einer gemeinsamen Verzweigung.

Um zu verhindern, dass Partikel aus dem Kraftstoff in das Servoventil 131A eindringen können, umfasst die Servoventilanordnung 130A mehrere (feinmaschige) Filterelemente. Dabei ist ein Filterelement 136A (HP-Filter) in der gemeinsamen Hochdruck-Kraftstoffleitung HP angeordnet. Jeweils ein Filterelement 136B, 136C (Servo-Filter 1 und Servo-Filter 2) ist in jeder der beiden Steuerleitungen 137 angeordnet. Ein weiteres Filterelement 136D (LP-Filter) ist in der gemeinsamen Niederdruck-Kraftstoffleitung LP angeordnet.

Während des Betriebs des Gasturbinentriebwerks 10 können die Filterelemente 136A-136D Partikel aus dem Kraftstoff herausfiltern. Diese Partikel können sich im Laufe der Zeit an oder in den Filterelementen 136A-136D ansammeln und so einen Kraftstoffdurchfluss erschweren. Hierdurch steigt die zum Erreichen einer bestimmten Verstellgeschwindigkeit und/oder zum Halten einer bestimmten Einstellung (z.B. der Nullpunktstellung) notwendige Stromstärke am elektrischen Aktor 134 an. Ist ein Filterelement 136A-136D zu einem bestimmten Maß mit Partikeln verblockt, könnte die Funktion des Servoventils 131A beeinträchtigt werden. Daher werden die Filterelemente 136A-136D vor Erreichen dieses Zustandes rechtzeitig ausgewechselt. Die Ermittlung eines optimierten Zeitpunktes der Auswechslung wird weiter unten noch näher beschrieben werden.

Werte des durch den elektrischen Aktor 134 fließenden Steuerstroms werden mittels der Messeinrichtung 110 erfasst. Hierzu ist die Messeinrichtung 110 an den elektrischen Aktor 134 angeschlossen. Die Messeinrichtung 110 ist z.B. das Triebwerksüberwachungssystem (Engine Monitoring System, EMS) oder ein Teil davon, alternativ eine davon verschiedene Einheit.

Ein Sensor 135 misst die Position, den Verfahrweg und/oder die Verstellgeschwindigkeit eines Kolbens des Servoventils 131A. Auch der Sensor 135 ist an die Messeinrichtung 110 angeschlossen, sodass die Messeinrichtung 110 Werte des Sensors 135 für die Position, den Verfahrweg und/oder die Verstellgeschwindigkeit erfassen kann.

Figur 4 zeigt eine weitere Servoventilanordnung 130B des Gasturbinentriebwerks 10. Die Servoventilanordnung 130B dient zur Steuerung einer Winkelstellung von Leitschaufeln des Gasturbinentriebwerks 10 (als Variable Stator Vane Actuator, VSVA). Die Servoventilanordnung 130B umfasst ein Servoventil 131B. Bei dem Servoventil 131B handelt es sich z.B. um ein zweistufiges Prallplattenservoventil. Das Servoventil 131B ist an eine Hochdruck-Kraftstoffleitung HP, eine Niederdruck-Kraftstoffleitung LP und zwei Ausgangsleitungen PC1, PC2 des Gasturbinentriebwerks 10 angeschlossen.

Das Servoventil 131B ist durch Ansteuern eines elektrischen Aktors 134 in Form eines Torquemotors einstellbar, um die eine oder die andere der beiden Ausgangsleitungen PC1, PC2 mit unter Druck stehendem Kraftstoff zu beaufschlagen. Die Ausgangsleitungen PC1, PC2 sind an einen Verstellmechanismus der Leitschaufeln angeschlossen, um diese wahlweise im einen oder im anderen Drehsinn zu schwenken.

Das Servoventil 131B umfasst zwei Steuereingänge, die über Steuerleitungen 137 mit unter Druck stehendem Kraftstoff beaufschlagt sind. Hierzu ist jede Steuerleitung 137 (optional über jeweils ein z.B. zur Kalibrierung einstellbares Ventil 133) an die Hochdruck-Kraftstoffleitung HP angeschlossen, z.B. entsprechend Figur 4 an einer gemeinsamen Verzeigung. In der Hochdruck-Kraftstoffleitung HP ist ferner ein optionales Drosselventil 132 zum Erzeugen eines definierten Druckzustandes angeordnet.

Um Partikel zurückzuhalten, ist ein Filterelement 136E (HP-Filter) in der gemeinsamen Hochdruck-Kraftstoffleitung HP angeordnet. Ein Sensor 135 misst die Position, den Verfahrweg und/oder die Verstellgeschwindigkeit eines Kolbens des Servoventils 131B. Der Sensor 135 und der elektrische Aktor 134 sind an die Messeinrichtung 110 angeschlossen.

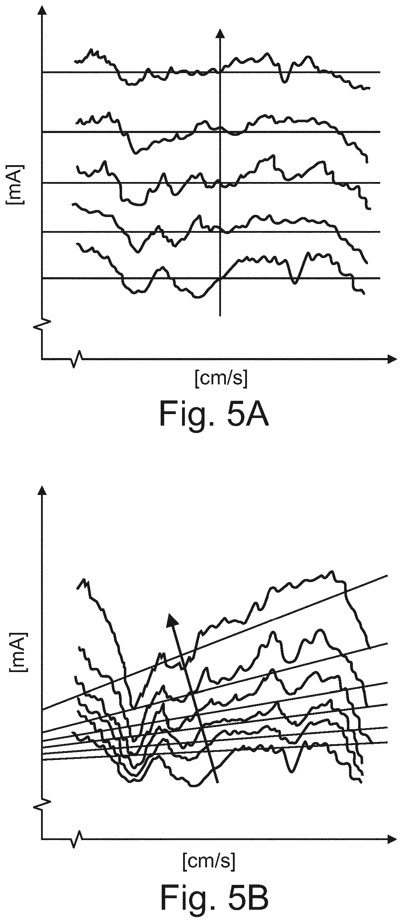

Die Figuren 5A und 5B zeigen schematisch den zum Erreichen einer bestimmten Verstellgeschwindigkeit (cm/s) notwendigen Steuerstrom (mA) des elektrischen Aktors 134 des Servoventils 131A gemäß Figur 3 bei verschiedenen Zuständen eines Filterelements der Servoventilanordnung 130A. Der Steuerstrom wird z.B. durch die Triebwerkssteuerung (Engine Electronic Controller, EEC) bereitgestellt.

Figur 5A zeigt die Steuerströme bei verschiedenen Zuständen eines der Filterelemente 136B, 136C (Servo-Filter 1, Servo-Filter 2). Es handelt sich somit um eine asymmetrische Verblockung der Servoventilanordnung 130A. Dabei stellt die unterste Kurve einen Zustand ohne Verblockung dar. Die unterste Gerade stellt einen linearen Fit der untersten Kurve dar. Die bei höheren Stromstärken liegenden Kurven und zugehörigen Geraden entsprechen Zuständen desselben Filterelements 136B oder 136C bei dessen zunehmender Verblockung, veranschaulicht durch einen eingezeichneten Pfeil.

Figur 5B zeigt die Steuerströme bei verschiedenen Zuständen des Filterelements 136A (HP-Filter). Es handelt sich somit um eine symmetrische Verblockung der Servoventilanordnung 130A. Dabei stellt die unterste Kurve einen Zustand ohne Verblockung dar und entspricht somit der untersten Kurve aus Figur 5A. Die unterste Gerade stellt wiederum einen linearen Fit der untersten Kurve dar. Ähnlich wie in Figur 5A entsprechen die bei höheren Stromstärken liegenden Kurven und zugehörigen Geraden Zuständen desselben Filterelements 136A bei dessen zunehmenden Verblockung, veranschaulicht wiederum durch einen eingezeichneten Pfeil.

Bei einem Vergleich der Figuren 5A und 5B wird klar, dass anhand der Veränderung der Abhängigkeit des Steuerstroms von der Verstellgeschwindigkeit im Laufe der Zeit Rückschlüsse darauf erlaubt, welches Filterelement der Servoventilanordnung 130A, 130B verblockt ist.

Eine asymmetrische Verblockung führt zu einer Verschiebung hin zu höheren Strömen (z.B. entsprechend einer Addition einer mit der Verblockung ansteigenden Konstanten). Eine symmetrische Verblockung führt zu einer größeren Steigung der Ströme mit der Verstellgeschwindigkeit (z.B. entsprechend einer Multiplikation mit einer mit der Verblockung ansteigenden Konstanten).

Eine besonders gute Unterscheidung ist möglich, indem (insbesondere gemittelte) Steuerströme zum Verstellen des Servoventils 130A (z.B. bei einer maximalen Verstellgeschwindigkeit oder bei einer anderen vorgegebenen Verstellgeschwwindigkeit) gegen den Steuerstrom zum Halten der Nullpunktstellung aufgetragen wird.

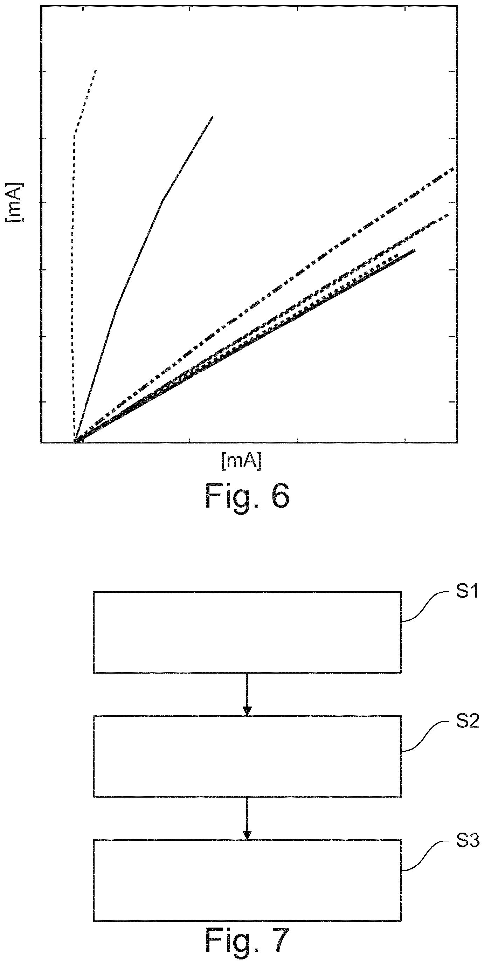

Figur 6 zeigt eine entsprechende Darstellung. Ansteigende Werte entlang einer Linie entsprechen dabei einer zunehmenden Verblockung. Die dünne gestrichelte Linie entspricht dem LP-Filter (symmetrisch). Die dünne durchgezogene Linie entspricht dem HP-Filter (symmetrisch). Die dicke strichpunktierte Linie entspricht einem (in den Figuren nichtgezeigten) Filterelement in der Ausgangsleitung PC1 (asymmetrisch). Die übrigen Linien entsprechen weiteren asymmetrischen Zuständen. Es ist ersichtlich, dass sich asymmetrische Verblockungen in dieser Darstellung deutlich von symmetrischen Verblockungen unterscheiden.

Anhand der zeitlichen Veränderung der erfassten Werte, insbesondere des Verlaufs des Steuerstroms gegenüber der Verstellgeschwindigkeit, kann auf eine zunehmende Verblockung eines oder mehrerer Filterelemente 136A-136E geschlossen werden.

Diese Analyse von zeitlich aufeinanderfolgenden Werten wird mittels der Analyseeinrichtung 120 durchgeführt. Die Analyseeinrichtung 120 ist dazu ausgebildet, die von der Messeinrichtung 110 ermittelten Werte der Steuerströme und, optional, der zugehörigen Verstellgeschwindigkeiten, Verfahrwege und/oder Verstellpositionen zu erhalten. Dabei kann vorgesehen sein, dass die stationäre Analyseeinrichtung 120 die ermittelten Werte jeweils nach einem Flug des Luftfahrzeugs 8 übermittelt bekommt, z.B. über eine drahtgebundene Verbindung, kabellos oder mittels eines körperlichen Datenträgers. Die Analyse kann somit offline erfolgen, also nicht in Echtzeit. Das ist möglich, weil eine Verblockung der Filterelemente, die auf eine temperaturbedingte Partikelbildung im Kraftstoff zurückzuführen ist, über einen längeren Zeitraum erfolgt.

Die Analyseeinrichtung 120 ist dazu ausgebildet, einen Trend in den ermittelten Steuerströmen zu ermitteln. Anhand des ermittelten Trends kann die Analyseeinrichtung 120 einen optimalen Zeitpunkt zum Wechsel von einem oder mehreren Filterelementen 136A-136E bestimmen, der z.B. minimale Standzeiten des Luftfahrzeugs 8 erzielt, z.B. indem ein ohnehin geplanter Wartungszeitpunkt ausgewählt wird. Ferner ist die Analyseeinheit 120 dazu ausgebildet, anhand der Veränderung der Abhängigkeit des Steuerstroms von der Verstellgeschwindigkeit im Laufe der Zeit zu ermitteln, welches Filterelement 136A-136E der Servoventilanordnung 130A, 130B verblockt ist. Optional trägt die Analyseeinrichtung 120 die Steuerströme zum Verstellen des Servoventils 130A, 130B gegen den Steuerstrom zum Halten der Nullpunktstellung auf, um den Zustand eines oder mehrerer der Filterelemente 136A-136E zu ermitteln.

Figur 7 zeigt ein Verfahren zur Bestimmung eines Zustands zumindest eines Filterelements 136A-136E zumindest einer Servoventilanordnung 130A, 130B des Gasturbinentriebwerks 10.

In einem ersten Schritt S1 wird mittels der Messeinrichtung 110 zu verschiedenen Zeitpunkten und/oder Zeitspannen jeweils eine Vielzahl von Werten des Steuerstroms des elektrischen Aktors 134 der Servoventilanordnung 130A, 130B erfasst (insbesondere gemessen). Dabei kann es sich um eine Servoventilanordnung 130A, 130B gemäß Figur 3 oder 4 handeln, alternativ um eine andere Servoventilanordnung des Gasturbinentriebwerks 10.

Die verschiedenen Zeitpunkte oder Zeitspannen können verschiedenen, z.B. aufeinanderfolgen Flügen des Luftfahrzeugs 8 mit dem Gasturbinentriebwerk 10 entsprechen, insbesondere jeweils einem Beschleunigungsmanöver, einem kontinuierlichen Betriebszustand oder einem Zustand der Betriebsbereitschaft des Gasturbinentriebwerks. So kann z.B. bei jedem Flug der charakteristische Steuerstromverlauf bei diesen verschiedenen Betriebszuständen ermittelt werden, was einen besonders präzisen Vergleich ermöglicht.

In einem zweiten Schritt S2 werden die mittels der Messeinrichtung 110 erfassten Werte an die Analyseeinrichtung 120 übermittelt, z.B. nachdem das Luftfahrzeug 8 nach einem Flug wieder gelandet ist.

In einem dritten Schritt S3 wird mittels der Analyseeinrichtung 120 die Vielzahl von erfassten und übermittelten Werten derart analysiert, dass eine zeitliche Änderung, insbesondere ein Trend des Steuerstroms ermittelt wird und anhand der zeitlichen Änderung des Steuerstroms ein Zustand des Filterelements 136A-136E bestimmt wird. Dabei kann die zeitliche Änderung, insbesondere der Trend des Verlaufs des Steuerstroms ermittelt werden, z.B. wie anhand von Figur 5A und 5B veranschaulicht.

Dabei kann jeweils ein Verlauf des Steuerstroms gegenüber einem Maß für eine Ventildynamik, nämlich z.B. einer Verstellgeschwindigkeit und/oder einer Verstellposition, des Servoventils 131A, 131B der Servoventilanordnung 130A, 130B ermittelt werden. Alternativ oder zusätzlich werden die Steuerströme zum Verstellen des Servoventils 130A, 130B gegen den Steuerstrom zum Halten der Nullpunktstellung aufgetragen, um den Zustand eines oder mehrerer der Filterelemente 136A-136E zu ermitteln.

Das Analysieren umfasst optional eine Vorhersage eines zukünftigen Zustands des Filterelements 136A-136E und/oder eine Bestimmung eines Zeitpunkts für einen Austausch des Filterelements 136A-136E.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Der Erfindungsgegenstand wird in den Ansprüchen definiert.

### Bezugszeichenliste

- 8: Luftfahrzeug
- 9: Hauptdrehachse
- 10: Gasturbinentriebwerk
- 11: Kerntriebwerk
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Fan
- 26: Welle
- 27: Verbindungswelle
- 30: Getriebe

- 100: System
- 110: Messeinrichtung
- 120: Analyseeinrichtung
- 130A, 130B: Servoventilanordnung
- 131A, 131B: Servoventil
- 132: Drosselventil
- 133A-133D: einstellbares Ventil
- 134: elektrischer Aktor
- 135: Sensor
- 136A-136E: Filterelement
- 137: Steuerleitung

- A: Kernluftstrom
- B: Bypassluftstrom
- C: Boden
- HP: Hochdruck-Kraftstoffleitung
- LP: Niederdruck-Kraftstoffleitung
- PC1, PC2: Ausgangsleitung
- V: Versorgungsleitung

## Patentansprüche

1. Verfahren zur Bestimmung eines Zustands zumindest eines Filterelements (136A-136E) zumindest einer Servoventilanordnung (130A, 130B) eines Gasturbinentriebwerks (10), umfassend folgende Schritte:
- Erfassen (S1), mittels einer Messeinrichtung (110), einer Vielzahl von Werten eines Steuerstroms eines elektrischen Aktors (134) der Servoventilanordnung (130A, 130B) zu verschiedenen Zeitpunkten und/oder Zeitspannen; und
- Analysieren (S3), mittels einer Analyseeinrichtung (120), der Vielzahl von Werten, wobei eine zeitliche Änderung des Steuerstroms ermittelt wird, und Bestimmen des Zustands des Filterelements (136A-136E) anhand der zeitlichen Änderung des Steuerstroms,
**dadurch gekennzeichnet, dass**
zu den verschiedenen Zeitpunkten und/oder Zeitspannen jeweils ein Verlauf des Steuerstroms gegenüber einem Maß für eine Ventildynamik eines Servoventils (131A, 131B) der Servoventilanordnung (130A, 130B) ermittelt wird, wobei beim Analysieren der zeitlichen Änderung des Steuerstroms die zeitliche Änderung des Verlaufs des Steuerstroms ermittelt wird.

2. Verfahren nach Anspruch 1, wobei zu den verschiedenen Zeitpunkten und/oder Zeitspannen jeweils ein Verlauf des Steuerstroms gegenüber einem Maß einer Verstellgeschwindigkeit des Servoventils (131A, 131B) der Servoventilanordnung (130A, 130B) ermittelt wird.

3. Verfahren nach einem der vorhergehenden Ansprüche, wobei die verschiedenen Zeitpunkte oder Zeitspannen verschiedenen Flügen eines Luftfahrzeugs (8) mit dem Gasturbinentriebwerk (10) entsprechen.

4. Verfahren nach einem der vorhergehenden Ansprüche, wobei die verschiedenen Zeitpunkte oder Zeitspannen jeweils einem Beschleunigungsmanöver, einem kontinuierlichen Betriebszustand oder einem Zustand der Betriebsbereitschaft des Gasturbinentriebwerks (10) entsprechen.

5. Verfahren nach einem der vorhergehenden Ansprüche, wobei das Analysieren eine Vorhersage eines zukünftigen Zustands des Filterelements (136A-136E) umfasst.

6. Verfahren nach einem der vorhergehenden Ansprüche, wobei die zumindest eine Servoventilanordnung (130A, 130B) ein zur Steuerung einer Kraftstoffzufuhr des Gasturbinentriebwerks (10) eingerichtetes Servoventil (131A) und/oder ein zur Steuerung einer Stellung von Schaufeln des Gasturbinentriebwerks (10) eingerichtetes Servoventil (131B) umfasst.

7. Verfahren nach einem der vorhergehenden Ansprüche, wobei die Analyse offline erfolgt.

8. System (100) zur Bestimmung eines Zustands zumindest eines Filterelements (136A-136E) zumindest einer Servoventilanordnung (130A, 130B) eines Gasturbinentriebwerks (10), umfassend:
- eine Messeinrichtung (110) eingerichtet zum Erfassen einer Vielzahl von Werten eines Steuerstroms eines elektrischen Aktors (134) der Servoventilanordnung (130A, 130B) zu verschiedenen Zeitpunkten und/oder Zeitspannen; und
- eine Analyseeinrichtung (120) eingerichtet zum Analysieren der Vielzahl von Werten wobei mit der Analyseeinrichtung (120) eine zeitliche Änderung des Steuerstroms ermittelbar ist, um einen Zustand des Filterelements (136A-136E) zu bestimmen,
**dadurch gekennzeichnet, dass**
dass das System (100) dazu eingerichtet ist, zu den verschiedenen Zeitpunkten und/oder Zeitspannen jeweils ein Verlauf des Steuerstroms gegenüber einem Maß für eine Ventildynamik eines Servoventils (131A, 131B) der Servoventilanordnung (130A, 130B) zu ermitteln, wobei beim Analysieren der zeitlichen Änderung des Steuerstroms die zeitliche Änderung des Verlaufs des Steuerstroms ermittelt wird.

9. System nach Anspruch 8, eingerichtet zur Durchführung des Verfahrens nach einem der Ansprüche 1 bis 7.

10. System nach Anspruch 8 oder 9, umfassend die Servoventilanordnung (130A, 130B).

11. System nach einem der Ansprüche 8 bis 10, umfassend das Gasturbinentriebwerk (10).

12. System nach Anspruch 11, wobei die Messeinrichtung (110) am Gasturbinentriebwerk (10) angeordnet ist, insbesondere fest damit verbunden ist.

13. System nach Anspruch 11 oder 12, wobei die Analyseeinrichtung (120) vom Gasturbinentriebwerk (10) beabstandet angeordnet ist.

14. System nach Anspruch 13, wobei das Gasturbinentriebwerk (10) relativ zur Analyseeinrichtung (120) bewegbar ist.

## Claims

1. Method for determining a state of at least one filter element (136A-136E) of at least one servovalve arrangement (130A, 130B) of a gas-turbine engine (10), comprising the following steps:
- detecting (S1), by means of a measuring device (110), a multiplicity of values of a control current of an electric actuator (134) of the servo-valve arrangement (130A, 130B) at different times and/or periods of time; and
- analysing (S3), by means of an analysis device (120), the multiplicity of values, wherein a change of the control current with respect to time is ascertained, and determining the state of the filter element (136A-136E) on the basis of the change of the control current with respect to time,
**characterized in that**,
at the different times and/or periods of time, in each case a profile of the control current with respect to a measure for valve dynamics of a servo valve (131A, 131B) of the servo-valve arrangement (130A, 130B) is ascertained, wherein, when analysing the change of the control current with respect to time, the change of the profile of the control current with respect to time is ascertained.

2. Method according to Claim 1, wherein, at the different times and/or periods of time, in each case a profile of the control current with respect to a measure of an adjustment speed of the servo valve (131A, 131B) of the servo-valve arrangement (130A, 130B) is ascertained.

3. Method according to either of the preceding claims, wherein the different times or periods of time correspond to different flights of an aircraft (8) having the gas-turbine engine (10).

4. Method according to one of the preceding claims, wherein the different times or periods of time correspond in each case to an acceleration manoeuvre, a continuous operating state or a state of operational readiness of the gas-turbine engine (10) .

5. Method according to one of the preceding claims, wherein analysing comprises predicting a future state of the filter element (136A-136E).

6. Method according to one of the preceding claims, wherein the at least one servo-valve arrangement (130A, 130B) comprises a servo valve (131A) configured for controlling a fuel supply to the gas-turbine engine (10), and/or a servo valve (131B) configured for controlling a position of blades or vanes of the gas-turbine engine (10).

7. Method according to one of the preceding claims, wherein the analysis takes place offline.

8. System (100) for determining a state of at least one filter element (136A-136E) of at least one servovalve arrangement (130A, 130B) of a gas-turbine engine (10), comprising:
- a measuring device (110) configured for detecting a multiplicity of values of a control current of an electric actuator (134) of the servo-valve arrangement (130A, 130B) at different times and/or periods of time; and
- an analysis device (120) configured for analysing the multiplicity of values, wherein, by way of the analysis device (120), a change of the control current with respect to time can be ascertained so as to determine a state of the filter element (136A-136E),
**characterized in that**
the system (100) is configured such that, at the different times and/or periods of time, it ascertains in each case a profile of the control current with respect to a measure for valve dynamics of a servo valve (131A, 131B) of the servo-valve arrangement (130A, 130B), wherein, when analysing the change of the control current with respect to time, the change of the profile of the control current with respect to time is ascertained.

9. System according to Claim 8, configured for carrying out the method according to one of Claims 1 to 7.

10. System according to Claim 8 or 9, comprising the servo-valve arrangement (130A, 130B).

11. System according to one of Claims 8 to 10, comprising the gas-turbine engine (10).

12. System according to Claim 11, wherein the measuring device (110) is arranged on the gas-turbine engine (10), in particular is connected fixedly thereto.

13. System according to Claim 11 or 12, wherein the analysis device (120) is arranged spaced apart from the gas-turbine engine (10).

14. System according to Claim 13, wherein the gas-turbine engine (10) is moveable relative to the analysis device (120).

## Revendications

1. Procédé de détermination d'un état d'au moins un élément filtrant (136A-136E) d'au moins un ensemble de servovalve (130A, 130B) d'un moteur à turbine à gaz (10), ledit procédé comprenant les étapes suivantes :
- détecter (S1), au moyen d'un dispositif de mesure (110), une pluralité de valeurs d'un courant de commande d'un actionneur électrique (134) de l'ensemble de servovalves (130A, 130B) à différents instants et/ou intervalles de temps ; et
- analyser (S3), au moyen d'un dispositif d'analyse (120), la pluralité de valeurs, une variation du courant de commande dans le temps étant déterminée, et déterminer l'état de l'élément filtrant (136A-136E) sur la base de la variation du courant de commande dans le temps,
**caractérisé en ce que**
aux différents instants et/ou intervalles de temps, un profil du courant de commande est déterminé en relation avec une mesure de la dynamique d'une servovalve (131A, 131B) de l'ensemble de servovalves (130A, 130B), la variation du profil du courant de commande dans le temps étant déterminée lors de l'analyse de la variation du courant de commande dans le temps.

2. Procédé selon la revendication 1, une variation du courant de commande étant déterminée en relation avec une mesure d'une vitesse de réglage de la servovalve (131A, 131B) de l'ensemble de servovalve (130A, 130B) aux différents instants et/ou intervalles de temps.

3. Procédé selon l'une des revendications précédentes, les différents instants ou intervalles de temps correspondant à différents vols d'un aéronef (8) avec le moteur à turbine à gaz (10).

4. Procédé selon l'une des revendications précédentes, les différents instants ou intervalles de temps correspondant respectivement à une manœuvre d'accélération, un état de fonctionnement continu ou un état de disponibilité opérationnelle du moteur à turbine à gaz (10).

5. Procédé selon l'une des revendications précédentes, l'analyse comprenant la prédiction d'un état futur de l'élément filtrant (136A-136E).

6. Procédé selon l'une des revendications précédentes, l'au moins un ensemble de servovalves (130A, 130B) comprenant une servovalve (131A) conçue pour commander une alimentation en carburant du moteur à turbine à gaz (10) et/ou une servovalve (131B) conçue pour commander une position d'aubes du moteur à turbine à gaz (10).

7. Procédé selon l'une des revendications précédentes, l'analyse étant effectuée hors ligne.

8. Système (100) de détermination d'un état d'au moins un élément filtrant (136A-136E) d'au moins un ensemble de servovalves (130A, 130B) d'un moteur à turbine à gaz (10), ledit système comprenant :
- un dispositif de mesure (110) conçu pour détecter une pluralité de valeurs d'un courant de commande d'un actionneur électrique (134) de l'ensemble de servovalves (130A, 130B) à différents instants et/ou intervalles de temps ; et
- un dispositif d'analyse (120) conçu pour analyser la pluralité de valeurs, une variation du courant de commande dans le temps pouvant être déterminée à l'aide du dispositif d'analyse (120) afin de déterminer un état de l'élément filtrant (136A-136E),
**caractérisé en ce que**
le système (100) est conçu pour déterminer aux différents instants et/ou intervalles de temps une variation d'un profil du courant de commande en relation avec une mesure de la dynamique d'une servovalve (131A, 131B) de l'ensemble de servovalves (130A, 130B), la variation du profil du courant de commande dans le temps étant déterminée lors de l'analyse du courant de commande dans le temps.

9. Système selon la revendication 8, conçu pour mettre en œuvre le procédé selon l'une des revendications 1 à 7.

10. Système selon la revendication 8 ou 9, comprenant l'ensemble de servovalves (130A, 130B).

11. Système selon l'une des revendications 8 à 10 comprenant le moteur à turbine à gaz (10).

12. Système selon la revendication 11, le dispositif de mesure (110) étant disposé au niveau du moteur à turbine à gaz (10), en particulier étant relié solidairement à celui-ci.

13. Système selon la revendication 11 ou 12, le dispositif d'analyse (120) étant disposé à distance du moteur à turbine à gaz (10).

14. Système selon la revendication 13, le moteur à turbine à gaz (10) étant mobile par rapport au dispositif d'analyse (120).
